# EUROPÄISCHE PATENTSCHRIFT

(11) **EP 0 595 037 B1**
(45) Veröffentlichungstag und Bekanntmachung des Hinweises auf die Patenterteilung: **28.05.1997**
(21) Anmeldenummer: 93115571.7
(22) Anmeldetag: 27.09.1993
(51) Int. Cl.: B29C 47/88, B29C 47/92

(54) **Vorrichtung zur Zentrierung einer Folienschlauchblase am Kopf eines Blasfolienextruders**
Apparatus for centering a blown tubular film on a blown film extruder head
Dispositif pour le centrage d'un élément tubulaire soufflé à partir d'un film par rapport à la tête de l'extrudeuse

(30) Priorität: 28.10.1992 DE 9214647 U
(43) Veröffentlichungstag der Anmeldung: 04.05.1994
(73) Patentinhaber: Windmöller & Hölscher, D-49516 Lengerich (DE)
(72) Erfinder: Voss, Klaus-Peter, D-49525 Lengerich (DE); Sensen, Klemens, D-49525 Lengerich (DE); Kötter, Egon, D-49549 Ladbergen (DE)

(56) Entgegenhaltungen:
- WO-A-90/15707
- DE-A- 3 707 826
- FR-A- 2 370 568
- FR-A- 2 517 248
- US-A- 4 209 475
- PATENT ABSTRACTS OF JAPAN vol. 8, no. 143 (M-306)(1580) 4. Juli 1984 & JP-A-59 041 229 (TOUKOU SHIZAI KOGYO K.K.) 7. März 1984

## Beschreibung

Die Erfindung betrifft eine Vorrichtung zur Zentrierung einer Folienschlauchblase am Kopf eines Blasfolienextruders, in welchem einem Düsenring, aus dem die Folienblase austritt, ein Außenkühlring zugeordnet ist, der unter anderem einen Boden und eine obere Außenkühlringscheibe aufweist, die gemeinsam an ihrem der Folienblase zugewandten Endbereich einen aus zwei Kühlringlippen gebildeten Ringspalt formen.

Bei gattungsgemäßen Blasfolienextrudern kommt es selbst bei optimal montierten Folienblaswerkzeugen immer wieder vor, daß die extrudierte Folienblase eine einseitige Dickstelle, d.h. eine sogenannte Dezentrierung aufweist, obwohl der Düsenspalt, aus dem die Folienschlauchblase austritt, über den gesamten Umfang einen konstanten Wert besitzt. Dies kann beispielsweise durch unterschiedliche Umwelteinflüsse, d.h. unterschiedliche Hallentemperatur etc., hervorgerufen werden.

Es ist nun bereits bekannt, die sogenannte Zentrierung einer Folienschlauchblase, d.h. die Vergleichmäßigung der einseitigen Dickstelle, über die radiale Verschiebung von Teilen der Düse, vorzugsweise einer Düsenlippe des Düsenrings vorzunehmen.

Hierdurch können beispielsweise Zusammenbautoleranzen bzw. die zuvor genannten Umwelteinflüsse auf die Folienschlauchblase ausgeglichen werden. Allerdings ist es bei der Zentrierung der Folienschlauchblase über Teile der Düse nachteilig, daß dort relativ große Kräfte zur Verstellung der Düse aufgebracht werden müssen.

Aus der DE-OS 37 07 826 ist ein Außenkühlring bekannt, dessen der Folienblase zugewandter Endbereich als federnder Ring ausgebildet ist. Über den gesamten Umfang dieses Ringes verteilt sind Stellschrauben angeordnet, durch die der Ring bereichsweise auf- und abbewegt werden kann, um parziell die Breite des Ringspaltes ändern zu können. Ein Nachteil einer solchen Anordnung besteht darin, daß der Ring durch nur bereichsweises Verstellen sozusagen verwürgt wird. Ein größerer Nachteil besteht allerdings darin, daß die Gesamtkühlluftmenge verändert wird, was einen insgesamt ungünstigen Einfluß auf die Kühlung der Folienblase hat.

Aufgabe der Erfindung ist es, eine Vorrichtung zum Zentrieren einer Folienblase an die Hand zu geben, die einfach baut und nur mit geringen Kräften verstellt werden kann.

Ausgehend von einem gattungsgemäßen Blasfolienextruder mit Außenkühlring wird diese Aufgabe durch die Merkmale des kennzeichnenden Teils des Hauptanspruches gelöst. Hierzu wird die obere Außenkühlringscheibe radial verschiebbar ausgebildet, so daß die Spaltbreite des Ringspaltes zwischen den Kühlringlippen veränderbar ist. Der insgesamt durch den Ringspalt austretende Kühlluftvolumenstrom bleibt dabei konstant.

Im Bereich des verengten Kühlringspalts tritt demnach ein kleinerer Partialluftvolumenstrom aus. Die Verengung des Kühlringspaltes führt aber automatisch an der gegenüberliegenden Seite zu einer Erweiterung des Kühlringspaltes, so daß dort aufgrund der Vergrößerung der Durchschnittsfläche ein vergleichsweise größerer Partialluftvolumenstrom austritt. Aufgrund dieser geänderten Luftverhältnisse können entsprechende Dickstellen oder auch Dünnstellen in der Folienschlauchblase ausgeglichen werden.

Die Außenkühlringscheibe kann über drei auf Umfang angeordente Verstellspindeln verstellbar sein. Dabei müssen die Verstellspindeln beim Verstellen der Außenkühlringscheibe jeweils synchron, d.h. aufeinander abgestimmt, verstellt werde. die Verstellspindeln können motorisch angetrieben sein.

Gemäß einer bevorzugten Ausführungsform können die Stellmotoren zum Verstellen der Verstellspindeln über einen Prozessor ansteuerbar sein, von dem Stellsignale entsprechend dem aktuellen Folienprofil der Folienschlauchblase abgegeben werden. Damit kann ein automatisch arbeitender Regelkreis zur Zentrierung der Folienschlauchblase bereitgestellt werden.

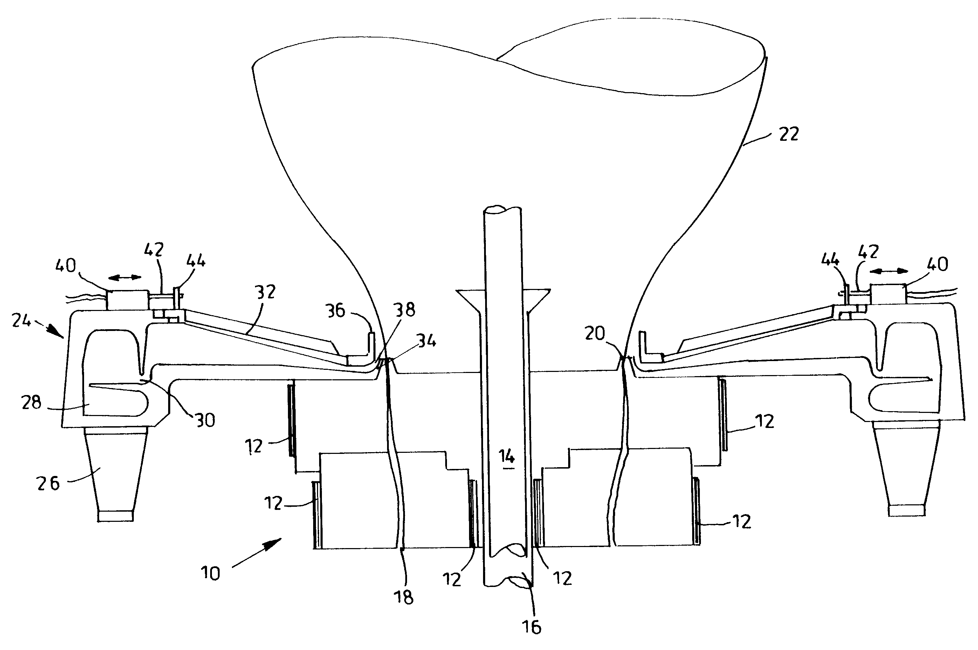

Weitere Einzelheiten und Vorteile der Erfindung werden anhand eines in der Zeichnung dargestellten Ausführungsbeispiels näher erläutert. Die einzige Figur zeigt einen teilweisen Schnitt durch einen Folienblaskopf mit einer Ausführungsform der erfindungsgemäßen Vorrichtung zur Zentrierung einer Folienschlauchblase.

Der obere Teil des Folienblaskopfs 10 weist in bekannter Art und Weise Heizbänder 12 auf. Zentrisch sind durch den Folienblaskopf ein Rohr für die Innenkühlluftzufuhr 14 und ein um dieses herum angeordnetes Rohr 16 für die Luftabsaugung angeordnet. Durch einen Ringkanal 18 wird die Schmelze dem Düsenring 20 zugeführt. Der Düsenring 20 formt in ebenfalls bekannter Art und Weise den Folienschlauch 22 aus.

Um den Blasfolienkopf 10 herum ist ein Außenkühlring 24 angeordnet. Der Außenkühlring 24 weist vier auf Umfang angeordnete Anschlußstutzen 26 für die Außenkühlluftzufuhr auf. Von diesen Anschlußstutzen 26 strömt die Luft in ein umlaufendes Labyrinthsystem 28 wodurch eine Vergleichmäßigung des durch eine Verengung 30 tretenden Luftvolumenstroms über den Ringumfang erreicht wird. Auf dem Außenkühlring 24 ist eine Außenkühlringscheibe 32 verschiebbar gelagert. Sowohl der Außenkühlring 24 wie auch die verstellbare Außenkühlringscheibe 32 bilden entsprechende Lippen 34 bzw. 36 eines Ringspalts 38, aus dem der Kühlluftvolumenstrom der Außenkühlluft hindurchtritt. Durch entsprechende Verstellung der Außenkühlringscheibe 32 relativ zu dem Außenkühlring 24 wird die Spaltbreite des Ringspalts 38 verändert.

Die Verstellung der Außenkühlringscheibe 32 erfolgt im Ausführungsbeispiel durch Stellmotoren 40 und durch diese angetriebene Gewindespindeln 42, die mit einem Gewinde in einer entsprechenden Platte 44 drehen, welche jeweils mit der Außenkühlringscheibe verschweißt ist. Hierdurch kann die Außenkühlringscheibe motorisch in Doppelpfeilrichtung verschoben werden. Dabei werden die Stellmotoren 40 synchron angesteuert. Im hier näher erläuterten Ausführungsbeispiel sind drei Stellmotoren gleichmäßig auf Umfang des Außenkühlrings 24 angeordnet.

Anstelle der hier dargestellten Stellmotoren 40 können auch einfache manuell bedienbare Schraubengewinde vorgesehen sein.

Die zuvor beschriebene Vorrichtung kann derart eingesetzt werden, daß anhand eines Foliendickenprofils mit Hilfe der Stellmotoren 40 der Außenkühlring, d. h. im vorliegenden Ausführungsbeispiel die verstellbare Außenkühlringscheibe, radial verschoben wird. Dadurch wird der Spalt zwischen der oberen und der unteren Kühlringlippe verändert. Diese Spaltveränderung führt zu einer über dem Umfang unterschiedlichen Kühlleistung an der Folienblase, so daß eine Zentrierung durchgeführt werden kann.

In einer anderen Anwendungsform der erfindungsgemäßen Vorrichtung kann ein vom Zentralrechner kommendes Folienprofil hinsichtlich einer Dezentrierung ausgewertet werden. Entsprechend dieser Auswertung werden Stellsignale an die Stellmotoren gesandt, so daß die Zentrierung in diesem Ausführungsbeispiel automatisch erfolgt. Hier ist also ein automatisch arbeitender Regelkreis gebildet.

Im vorliegenden Ausführungsbeispiel wurde der Ringspalt 38 durch relative Verstellbarkeit der Außenkühlringscheibe 32 verändert. Grundsätzlich wäre es auch im Rahmen der Erfindung möglich, den Ringspalt 38 in anderer Weise, beispielsweise durch Verschiebung einer verstellbar gelagerten unteren Kühlringscheibe zu verstellen.

## Patentansprüche

1. Vorrichtung zur Zentrierung einer Folienschlauchblase (22) am Kopf (10) eines Blasfolienextruders, in welchem einem Düsenring (20), aus dem die Folieblase (22) austritt, ein Außenkühlring (24) zugeordnet ist, der unter anderem einen Boden und eine obere Außenkühlringscheibe (32) aufweist, die gemeinsam an ihrem der Folienblase (22) zugewandten Endbereich einen aus zwei Kühlringlippen (34 und 36) gebildeten Ringspalt (38) formen,
**dadurch gekennzeichnet,**
daß die obere Außenkühlringscheibe (32) radial verschiebbar ausgebildet ist, so daß die Spaltbreite des Ringspaltes (38) zwischen den Kühlringlippen (34 und 36) veränderbar ist.

2. Vorrichtung nach Anspruch 1,
**dadurch gekennzeichnet,**
daß die Außenkühlringscheibe (32) über drei am Umfang angeordnete Verstellspindeln (42) verstellbar sind.

3. Vorrichtung nach Anspruch 1 oder 2,
**dadurch gekennzeichnet,**
daß die Verstellspindeln (32) motorisch (Motoren 40) angetrieben sind.

4. Vorrichtung nach einem der Ansprüche 1 bis 3,
**dadurch gekennzeichnet,**
daß die Stellmotoren (40) über einen Prozessor ansteuerbar sind, von dem Stellsignale entsprechend dem aktuellen Folienprofil der Folienschlauchblase (22) abgegeben werden.

## Claims

1. Apparatus for centring a blown tubular film (22) on the head (10) of a blown film extruder, in which there is assigned to a die ring (20) from which the blown film (22) emerges, an outer cooling ring (24) which has inter alia a base and an upper outer-cooling-ring disc (32) which together form at their end region, facing the blown film (22), an annular gap (38) formed by two cooling-ring lips (34 and 36), characterized in that the upper outer-cooling-ring disc (32) is of a radially displaceable design, so that the gap width of the annular gap (38) between the cooling-ring lips (34 and 36) is variable.

2. Apparatus according to Claim 1, characterized in that the outer-cooling-ring disc (32) is adjustable by means of three adjusting spindles (42) arranged on the circumference.

3. Apparatus according to Claim 1 or 2, characterized in that the adjusting spindles (32) are motor-driven (motors 40).

4. Apparatus according to one of Claims 1 to 3, characterized in that the servo-motors (40) can be activated by means of a processor, from which actuating signals corresponding to the current film profile of the blown tubular film (22) are emitted.

## Revendications

1. Dispositif pour le centrage d'une bulle de gaine en feuille (22) à la tête (10) d'une extrudeuse de feuilles de soufflage, où il est associé à un anneau de filière (20) d'où sort la bulle en feuille (22) un anneau de refroidissement extérieur (24) qui présente entre autres un fond et un disque annulaire de refroidissement extérieur supérieur (32) qui forment ensemble à leur zone d'extrémité orientée vers la bulle en feuille (22) une fente annulaire (38) formée de deux lèvres d'anneau de refroidissement (34 et 36), caractérisé en ce que le disque annulaire de refroidissement extérieur supérieur (32) est réalisé de façon déplaçable radialement de telle Sorte que la largeur de la fente annulaire (38) peut être modifiée entre les lèvres (34 et 36) de l'anneau de refroidissement.

2. Dispositif selon la revendication 1, caractérisé en ce que le disque annulaire de refroidissement extérieur (32) est ajustable par trois broches de réglage (42) disposées sur le pourtour.

3. Dispositif selon la revendication 1 ou 2, caractérisé en ce que les broches de réglage (42) sont entrainées par moteur (moteurs 40).

4. Dispositif selon l'une des revendications 1 à 3 caractérisé en ce que les moteurs de positionement (40) peuvent être commandés par un processeur qui émet des signaux de positionnement conformément au profil de feuille actuel de la bulle de gaine en feuille (22).
